# EUROPÄISCHE PATENTSCHRIFT

(11) **EP 1 294 524 B1**
(45) Veröffentlichungstag und Bekanntmachung des Hinweises auf die Patenterteilung: **13.10.2004**
(21) Anmeldenummer: 01935959.5
(22) Anmeldetag: 12.04.2001
(51) Int. Cl.: B23K 9/20

(54) **BOLZENSCHWEISSVERFAHREN UND BOLZENSCHWEISSVORRICHTUNG, INSBESONDERE FÜR DAS BOLZENSCHWEISSEN OHNE STÜTZFUSS**
STUD WELDING METHOD AND STUD WELDING DEVICE, ESPECIALLY FOR STUD WELDING WITHOUT A SUPPORT FOOT
PROCEDE ET DISPOSITIF DE SOUDAGE DE GOUJONS, EN PARTICULIER POUR LE SOUDAGE DE GOUJONS SANS PIED D'APPUI

(30) Priorität: 12.04.2000 DE 10018231
(43) Veröffentlichungstag der Anmeldung: 26.03.2003
(73) Patentinhaber: Nelson Bolzenschweiss-Technik GmbH & Co. KG, 58285 Gevelsberg (DE)
(72) Erfinder: CITRICH, Ulrich, 58285 Gevelsberg (DE); MADSAK, Jürgen, 58339 Breckerfeld (DE)
(74) Vertreter: Eder, Christian, Dipl.-Ing.
(86) Internationale Anmeldenummer: PCT/DE2001/001454
(87) Internationale Veröffentlichungsnummer: WO 2001/076802

(56) Entgegenhaltungen:
- US-A- 5 030 815
- US-A- 5 406 044
- US-A- 6 011 234

## Beschreibung

Die Erfindung betrifft ein Verfahren und eine Vorrichtung für das Bolzenschweißen, insbesondere für das Bolzenschweißen ohne Stützfuß.

Bei bisher überwiegend verwendeten Bolzenschweißgeräten wird ein Schweißkopf bzw. für manuelles Schweißen eine Schweißpistole eingesetzt, wobei jeweils am vorderen Ende des Schweißkopfs bzw. der Schweißpistole ein Stützfuß oder Abstandshalter vorgesehen ist. Nach dem Aufsetzen des Bolzenschweißkopfs bzw. der Schweißpistole mit dem Stützfuß auf die Werkstückoberfläche ergibt sich somit eine definierte Position, insbesondere ein definierter Abstand des Schweißkopfs bzw. der Schweißpistole von der Werkstückoberfläche. Die Bewegung des Bolzenhalters und des darin gehaltenen und zu verschweißenden Teils in Bezug auf die Werkstückoberfläche kann dann ausgehend von dieser definierten Position vorgenommen werden.

Eine derartige Bolzenschweißvorrichtung ist beispielsweise in der DE 32 15 453 Cl beschrieben. Bei dieser Bolzenschweißvorrichtung weist die Bolzenschweißpistole einen elektromotorischen Antrieb für die Schweißachse auf, wobei ein Gleichstrommotor die Schweißachse (hier die Pinole) und den damit verbundenen Bolzenhalter in axialer Richtung antreibt. Nach dem Aufsetzen der Schweißpistole mit dem Stützfuß auf die Werkstückoberfläche wird der Bolzenhalter zunächst solange auf die Werkstückoberfläche zubewegt, bis die Stirnseite des im Bolzenhalter gehaltenen zu verschweißenden Teils in Kontakt mit der Werkstückoberfläche steht. Anschließend wird der Strom für den Vorstromlichtbogen eingeschaltet und die Schweißachse mittels des Gleichstrommotors von der Werkstückoberfläche abgehoben. Hierdurch wird ein Vorstromlichtbogen gezündet. Der weitere Verlauf entspricht dem üblichen Verfahren des Bolzenschweißens mit Hubzündung.

Des Weiteren ist aus der EP 0 776 261 B1 eine Vorrichtung zum Zusammenschweißen wenigstens zweier Teile bekannt, bei der ein Schweißkopf mittels eines Verstellantriebs, beispielsweise eines Roboterarms, gegenüber der beabsichtigten Schweißstelle des Werkstücks ausgerichtet und anschließend in Richtung auf das Werkstück bewegt wird, bis die Stirnseite des zu verschweißenden Teils an die Werkstückoberfläche angepresst ist. Der Schweißkopf wird dabei über die Position einer erstmaligen Berührung des zu verschweißenden Teils mit der Werkstückoberfläche hinaus in Richtung auf das Werkstück zubewegt. Die Schweißachse des Schweißkopfs ist hierzu derart ausgebildet, dass sie bei dieser weiteren Bewegung des Schweißkopfs in Richtung auf das Werkstück in den Schweißkopf hineinbewegt wird. Durch das Vorsehen eines derartigen zusätzlichen Bewegungswegs für den Schweißkopf ist es möglich, in einem großen Bereich unabhängig von Lagetoleranzen des Werkstücks und Toleranzen bei der Bewegung des Schweißkopfs einen sicheren Kontakt zwischen der Stirnseite des zu verschweißenden Teils und dem Werkstück herzustellen. Nach dem Stoppen der Bewegung des Schweißkopfs kann die Schweißachse des Schweißkopfs mit dem Bolzenhalter und dem darin gehaltenen zu verschweißenden Teil ausgehend von der dann vorhandenen Ausgangsstellung zur weiteren Durchführung des Schweißvorgangs bewegt werden. Diese Bewegung erfolgt mittels des Antriebs für die Schweißachse. Diese Vorrichtung bzw. dieses Verfahren ermöglicht somit ein Schweißen ohne Stützfuß.

Der Vorteil des Schweißens ohne Stützfuß ist u.a. darin zu sehen, dass der Schweißbereich, d.h. der Bereich der Werkstückoberfläche, der für das Schweißen zugänglich sein muss, im Vergleich zum Schweißen mit Stützfuß eine deutlich geringere Fläche aufweisen kann. Insbesondere ist es beim Schweißen mit Stützfuß kaum möglich, ein zu verschweißendes Teil in relativ engen Nuten des Werkstücks mit diesem zu verschweißen.

Insbesondere bei Bolzenschweißverfahren bzw. Bolzenschweißvorrichtungen, die ohne Stützfuß arbeiten, besteht jedoch eine gewisse Gefahr darin, dass bei einem Fehlen eines zu verschweißenden Teils im Bolzenhalter der Bolzenhalter selbst mit dem Werkstück verschweißt wird.

Bei Bolzenschweißvorrichtungen, die mit einem Stützfuß arbeiten, könnte das Detektieren des Vorhandensein eines zu verschweißenden Teils im Bolzenhalter auf einfache Weise dadurch erfolgen, dass nach dem Aufsetzen des Schweißkopfs auf das Werkstück der Weg gemessen wurde, um den die Schweißachse auf das Werkstück zubewegt werden muss, bis ein Kontakt erreicht ist. In Kenntnis der Geometrie des zu verschweißenden Teils und dessen Position im Bolzenhalter kann dann auf das Vorhandensein eines zu verschweißenden Teils geschlossen werden, wenn die zurückgelegte Wegstrecke der Schweißachse bis zum Kontakt des zu verschweißenden Teils mit dem Werkstück kleiner ist als ein vorgegebener Weg. Dieses Verfahren versagt jedoch bei Bolzenschweißvorrichtungen, die ohne Stützfuß arbeiten.

Der Erfindung liegt daher die Aufgabe zugrunde, ein Bolzenschweißverfahren und eine Bolzenschweißvorrichtung, insbesondere für das Bolzenschweißen ohne Stützfuß zu schaffen, wobei das Vorhandensein eines zu verschweißenden Teils im Bolzenhalter sicher detektierbar ist.

Die Erfindung löst diese Aufgabe mit den Merkmalen der Patentansprüche 1 bzw. 10 und 15. Des Weiteren schafft die Erfindung ein Programm, insbesondere zur Aufrüstung bestehender Bolzenschweißvorrichtungen, um das erfindungsgemäße Verfahren durchführen zu können.

Nach einer Ausführungsform der Erfindung wird der Bolzenhalter zunächst ohne ein in diesem gehaltenes zu verschweißendes Teil in Richtung auf die Werkstückoberfläche zubewegt, zumindest so lange, wie ein Kontakt zwischen der Stirnseite des Teils und der Werkstückoberfläche gegeben ist. Anschließend wird der Bolzenhalter vom Werkstück abgehoben, bis ein vorbestimmter Abstand zwischen der Stirnseite des Bolzenhalters und der Werkstückoberfläche erreicht ist. Anschließend oder teilweise gleichzeitig kann dann ein zu verschweißendes Teil in den Bolzenhalter zugeführt werden. Dies erfolgt vorzugsweise mittels einer üblichen selbsttätigen Bolzenzuführvorrichtung. Das Zuführen erfolgt so, dass die Stirnseite des zu verschweißenden Teils um einen vorbestimmten Überstand über die Stirnseite des Bolzenhalters hinausragt.

Anschließend wird der Bolzenhalter wieder in Richtung auf die Werkstückoberfläche zubewegt, bis ein Kontakt zwischen der Stirnseite des zu verschweißenden Teils mit der Werkstückoberfläche detektiert wird. Die Wegstrecke, die ausgehend von dem zunächst eingestellten Abstand zwischen Bolzenhalter und Werkstück bis zum Detektieren des Kontakts zurückgelegt wird, ermöglicht dann eine Aussage darüber, ob ein zu verschweißendes Teil im Bolzenhalter gehalten ist oder nicht. Entspricht die erfasste zurückgelegte Wegstrecke im Wesentlichen dem zuvor eingestellten Abstand der Bolzenhalterstirnseite von der Werkstückoberfläche, so kann mit hoher Sicherheit darauf geschlossen werden, dass kein zu verschweißendes Teil im Bolzenhalter gehalten ist. Ist die zurückgelegte Wegstrecke jedoch kleiner als der zuvor eingestellte Abstand, so kann hieraus auf das Vorhandensein eines zu verschweißenden Teils im Bolzenhalter geschlossen werden. In diesem Fall kann der Schweißvorgang ausgeführt werden. Andernfalls kann der Schweißvorgang blockiert werden, oder es können Maßnahmen ergriffen werden, wie z.B. das erneute Abheben des Bolzenhalters vom Werkstück um einen ausreichenden Betrag und das erneute Zuführen eines zu verschweißenden Teils.

An dieser Stelle sei bemerkt, dass die Bewegung des Bolzenhalters sowohl durch eine Bewegung des gesamten Schweißkopfs, beispielsweise durch einen Roboterann oder dergleichen, oder durch eine Bewegung lediglich der Schweißachse mittels eines im Schweißkopf vorgesehenen Antriebs erfolgen kann.

Das vorstehend erläuterte Verfahren ermöglicht zudem das Treffen einer Aussage über eine zulässige Position des zu verschweißenden Teils im Bolzenhalter. Hierzu kann wiederum die Differenz zwischen dem zuvor gesetzten Abstand und der erfassten Wegstrecke dienen, die nach dem Zuführen des zu verschweißenden Teils ausgehend vom gesetzten Abstand bis zum Erreichen des Kontaktpunkts zurückgelegt wird. Liegt diese Wegstrecke innerhalb eines vorbestimmten Zulässigkeitsbereichs, so kann auf eine korrekte axiale Position des zu verschweißenden Teils im Bolzenhalter, insbesondere auf einen ausreichenden Überstand, geschlossen werden.

Nach einer Ausführungsform der Erfindung kann das erstmalige Bewegen des Bolzenhalters in Richtung auf die Werkstückoberfläche nur so lange ausgeführt werden, bis ein (erstmaliger) Kontakt zwischen Bolzenhalter und Werkstück. detektiert wird.

Das Detektieren des Kontakts zwischen Bolzenhalter und Werkstückoberfläche bzw. zwischen dem zu verschweißenden Teil und der Werkstückoberfläche kann ganz allgemein beispielsweise durch das Detektieren eines elektrischen oder mechanischen Kontakts erfolgen.

Nach einer Ausführungsform der Erfindung kann das Durchführen der Bewegungen für den Bolzenhalter in der vorstehend erläuterten Form ausschließlich durch einen im Bolzenhalterschweißkopf vorgesehenen Antrieb für den Bolzenhalter oder ein damit gekoppeltes Elements bewirkt werden.

Bei dieser Ausführungsform wird in der Regel ein weiterer Antrieb für das Positionieren des gesamten Schweißkopfs vorgesehen sein, mit welchem der Schweißkopf zunächst so in Bezug auf das Werkstück positioniert wird, dass an der gewünschten Schweißstelle zwischen der Stirnseite des Bolzenhalters und der Werkstückoberfläche ein Abstand vorliegt. Ausgehend von dieser Position können dann die vorstehend erläuterten Bewegungen und Maßnahmen für das Detektieren des Vorhandenseins eines zu verschweißenden Teils im Bolzenhalter durchgeführt werden.

In einer anderen Ausführungsform der Erfindung kann das Bewegen des Bolzenhalters bis zu einem Kontakt zwischen der Stirnseite des Bolzenhalters und der Werkstückoberfläche auch mittels eines Positionierantriebs für den gesamten Bolzenschweißkopf bewirkt werden. Hier wird man entsprechend dem Verfahren bzw. der Vorrichtung gemäß der EP 0 776 261 B1 aus Gründen der Einfachheit die Bewegung des Bolzenhalters mittels des Positionierantriebs für den Bolzenschweißkopf so vornehmen, dass mit ausreichender Sicherheit ein Kontakt zwischen Bolzenhalter und Werkstückoberfläche erreicht wird, auch wenn relativ große Toleranzen für die Lage des Werkstücks bzw. die Positionierung des Schweißkopfs oder die Lage des zu verschweißenden Teils im Bolzenhalter auftreten können. Beispielsweise kann hierzu dem Positionierantrieb eine absolute Position im Raum mitgeteilt werden, welche gesteuert oder geregelt angefahren wird.

Mit diesem Verfahren wird daher der Bolzenschweißkopf in der Regel über den erstmaligen Kontaktpunkt zwischen Bolzenhalter und Werkstück hinaus in Richtung auf das Werkstück zubewegt werden. Der Bolzenhalter bzw. der Antrieb für den Bolzenhalter (bzw. die Schweißachse) muss dann so ausgeführt sein, dass der Bolzenhalter bei einer auftretenden (überschüssigen) Bewegung des Schweißkopfs auf das Werkstück in den Schweißkopf hinein bewegt werden kann.

Ausgehend von der dann erreichten Ausgangsposition können die weiteren, vorstehend erläuterten Bewegungen und Maßnahmen für das Detektieren des Vorhandenseins eines zu verschweißenden Teils im Werkstück durchgeführt werden.

In einer weiteren Ausführungsform der Erfindung ist bereits beim erstmaligen Bewegen des Bolzenhalters in Richtung auf das Werkstück in diesem ein zu verschweißendes Teil gehalten. Der Bolzenhalter wird dabei wiederum so lange auf die Werkstückoberfläche zubewegt, bis ein Kontakt zwischen der Stirnseite des zu verschweißenden Teils und der Werkstückoberfläche gegeben ist. Das zu verschweißende Teil wird hierzu, vorzugsweise in einer arretierten Position, derart im Bolzenhalter gehalten, dass die Stirnseite des zu verschweißenden Teils um einen vorbestimmten Überstand über die Stirnseite des Bolzenhalters hinausragt. Diese Position des zu verschweißenden Teils entspricht der üblichen Position, mit welcher ein Verschweißen möglich ist.

Nach dem Detektieren eines Kontakts zwischen zu verschweißendem Teil und Werkstück wird die arretierte Position des zu verschweißenden Teils im Bolzenhalter gelöst, so dass eine axiale Bewegung des zu verschweißenden Teils relativ zum Bolzenhalter möglich ist. Nach dem Lösen der arretierten Position wird ein Versuch unternommen, den Bolzenhalter weiter in Richtung auf das Werkstück zuzubewegen. Eine mögliche weitere Bewegung wird detektiert. Anstelle des Haltens des zu verschweißenden Teils in einer arretierten Position kann dieses auch so gehalten werden, dass erst bei Überschreiten einer vorbestimmten Aufsetzkraft (des Teils auf das Werkstück) das zu verschweißende Teil in den Bolzenhalter hineingeschoben wird.

Wird eine weitere Bewegung in Richtung auf das Werkstück festgestellt, so kann hieraus auf das Vorhandensein eines Teils im Bolzenhalter geschlossen werden.

Kann keine weitere Bewegung detektiert werden, so wird das Fehlen eines zu verschweißenden Teils im Bolzenhalter angenommen und der Schweißvorgang abgebrochen bzw. es werden weitere Maßnahmen für das Zuführen eines zu verschweißenden Teils in den Bolzenhalter ergriffen.

Wurde jedoch das Vorhandensein eines zu verschweißenden Teils festgestellt, so wird der Bolzenhalter um einen ausreichenden Abstand von der Werkstückoberfläche abgehoben und das zu verschweißende Teil wieder in die Ausgangsposition (Schweißposition) im Bolzenhalter bewegt. Anschließend kann der Schweißvorgang in üblicher Weise durchgeführt werden.

Nach einer Ausführungsform dieses erfindungsgemäßen Verfahrens kann der Versuch einer weiteren Bewegung dann abgebrochen werden, wenn die Leistungsaufnahme eines Antriebs für den Bolzenhalter und den Schweißkopf (je nach dem, mit welchem Antrieb die weitere Bewegung bewirkt werden soll) oder die bei dem Bewegungsversuch im Bolzenhalter oder einem damit gekoppelten Element wirkende Kraft eine vorbestimmte Schwelle überschreitet.

Wird zwischen dem Beginn und dem Abbruch des Bewegungsversuchs keine, eine vorbestimmte Schwelle überschreitende Bewegung des Bolzenhalters festgestellt, so wird auf das Fehlen eines zu verschweißenden Teils im Bolzenhalter geschlossen.

Bei dieser Ausführungsform des erfindungsgemäßen Verfahrens kann nach dem erneuten Bewegen des zu verschweißenden Teils in seine Ausgangsposition im Bolzenhalter eine erneute Abstandspositionierung des Bolzenhalters in Bezug auf die Werkstückoberfläche bzw. dessen Aufsetzen auf die Werkstückoberfläche vorgenommen werden. Dies kann, wie bereits erläutert, durch das Bewegen des Bolzenhalters in Richtung auf das Werkstück erfolgen, bis ein Kontakt detektiert wird, und ggf. ein anschließendes Abheben des Bolzenhalters um eine vorbestimmte Wegstrecke.

Nach einer weiteren Ausführungsform wird auch beim Zuführen des zu verschweißenden Teils ein möglicher Kontakt mit der Werkstückoberfläche überwacht. Bei Detektieren eines Kontakts bereits beim Zuführvorgang kann dann mit hoher Sicherheit darauf geschlossen werden, dass bereits vor dem Zuführvorgang ein zu verschweißendes Teil im Bolzenhalter gehalten war. In diesem Fall kann das Nachvornebewegen des zu verschweißenden Teils im Bolzenhalter gestoppt werden.

An dieser Stelle sei darauf hingewiesen, dass das Zuführen eines zu verschweißenden Teils in den Bolzenhalter nur dann erfolgen sollte, wenn zwischen der Stirnseite des Bolzenhalters und der Werkstückoberfläche ein ausreichender Abstand vorliegt. Dieser Abstand muss in jedem Fall größer sein, als der Überstand, der nach dem Zuführen des zu verschweißenden Teils gegeben sein soll.

Wird mit der vorstehend erläuterten Maßnahme festgestellt, dass bereits vor dem Zuführvorgang ein zu verschweißendes Teils im Bolzenhalter vorhanden war, so kann der Bolzenhalter in eine Position bewegt werden, in der, gegebenenfalls durch ein erneutes Starten der Zuführbewegung des Ladestifts das bereits zuvor vorhandene zu verschweißende Teil aus dem Bolzenhalter ausgestossen werden kann.

Das erfindungsgemäße Verfahren lässt sich ohne wesentliche Hardwareänderungen in bereits bestehende Bolzenschweißvorrichtungen integrieren, die eine Mikroprozessorsteuerung aufweisen. Das erfindungsgemäße Verfahren kann hierzu durch das Schaffen eines Steuerprogramms (Software) realisiert werden, welches in einer bereits vorhandenen Auswerte- und Steuereinheit integriert werden kann.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische Darstellung einer Bolzenschweißvorrichtung nach der Erfindung;
- Fig. 2: die schematische Darstellung verschiedener Phasen der Bewegung des Bolzenhalters zur Realisierung einer ersten Ausführungsform des Verfahrens nach der Erfindung und
- Fig. 3: die schematische Darstellung verschiedener Phasen der Bewegung des Bolzenhalters zur Realisierung einer zweiten Ausführungsform des Verfahrens nach der Erfindung.

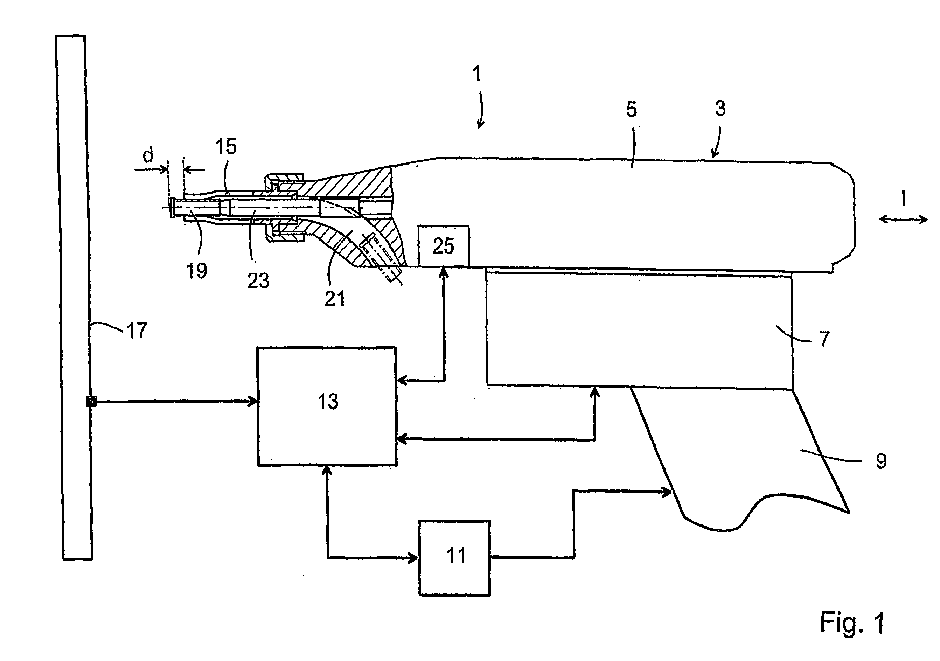

Fig. 1 zeigt eine Bolzenschweißvorrichtung 1, welche einen Bolzenschweißkopf 3 umfasst, welcher aus der eigentlichen Schweißachse 5 und einem Antrieb 7 zur axialen Bewegung der Schweißachse 5 (Pfeil I in Fig. 1) besteht.

Der gesamte Schweißkopf 3 kann, wie in Fig. 1 angedeutet, an einem Roboterarm 9 angeordnet sein, mittels welchem der Schweißkopf 3 in einer oder mehreren räumlichen Achsen bewegbar ist.

Sowohl der Antrieb 7 für die Schweißachse 5 als auch ein Antrieb 11 für den Roboterarm 9 wird mittels einer Auswerte- und Steuereinheit 13 angesteuert.

Die Auswerte- und Steuereinheit 13 kann dabei zusätzlich (in nicht dargestellter Art und Weise) die weiteren Ansteuerungen des Schweißkopfs 3 hinsichtlich der Steuerung des Schweißstroms übernehmen. Da sich die vorliegende Erfindung im Wesentlichen auf eine Bewegung des Schweißkopfs 3 bzw. eines Bolzenhalters 15 der Schweißachse 5 bezieht, wurde auf eine Darstellung weiterer Komponenten der Bolzenschweißvorrichtung 1 verzichtet.

Fig. 1 zeigt des Weiteren ein Werkstück 17, auf welches ein im Bolzenhalter 15 gehaltenes zu verschweißendes Teil (Bolzen) 19 aufgeschweißt werden soll. Das Werkstück 17 steht in elektrischem Kontakt mit der Auswerte- und Steuereinheit 13. Dies ist zum einen für das Fließen eines Schweißstroms während des Schweißvorgangs erforderlich und zum anderen, um in der nachfolgend erläuterten Art und Weise einen elektrischen Kontakt zwischen dem Bolzenhalter 15 bzw. dem zu verschweißenden Teil 19 und dem Werkstück 17 zu detektieren.

Fig. 1 zeigt des Weiteren, dass der Schweißachse 5 des Bolzenschweißkopfs 3 mittels einer nicht näher dargestellten automatischen Zuführvorrichtung zu verschweißende Teile 19 zugeführt werden können. Dies erfolgt mittels eines Zuführkanals 21 im vorderen Bereich des Schweißkopfs 3, welcher in üblicher Weise mittels eines Schlauchs (nicht dargestellt) mit der automatischen Zuführvorrichtung verbunden ist.

Das Zuführen eines zu verschweißenden Teils 19 erfolgt mittels Blasluft, wodurch das zu verschweißende Teil über den Zuführkanal 21 in den vorderen Bereich des Bolzenschweißkopfs 3 bewegt wird. In dieser Lage befindet sich das zu verschweißende Teil bereits im Wesentlichen in der Achse der Schweißachse 5 bzw. des Bolzenhalters 15. Das zu verschweißende Teil 19 wird dann mittels eines Ladestifts 23 durch den Bolzenhalter hindurch in dessen vorderen Bereich in eine axiale Position geschoben, in welcher ein Verschweißen des Teils 19 möglich ist. Hierzu muss das Teil 19 selbstverständlich um einen vorbestimmten Überstand d über die Stirnseite des Bolzens hinausragen. Der Ladestift 23 wird von einem in Fig. 1 nur schematisch dargestellten Antrieb 25 beaufschlagt, der üblicherweise als pneumatischer Antrieb ausgebildet ist. Der Antrieb 25 ermöglicht die Bewegung des Ladestifts 23 zwischen einer vorderen Position, in welcher die Stirnseite des Ladestifts 23 die rückwärtige Stirnseite des zu verschweißenden Teils 19 beaufschlagt, und einer zurückgezogenen Position, in welcher der vordere Bereich des Ladestifts 23 soweit zurückgezogen ist, dass der Zuführkanal 21 für das Zuführen eines zu verschweißenden Teils frei ist. Der Antrieb 25 wird ebenfalls von der Auswerte- und Steuereinheit 13 angesteuert.

Im Folgenden wird das erfindungsgemäße Bolzenschweißverfahren mittels einer Vorrichtung, wie sie in Fig. 1 dargestellt ist, näher erläutert.

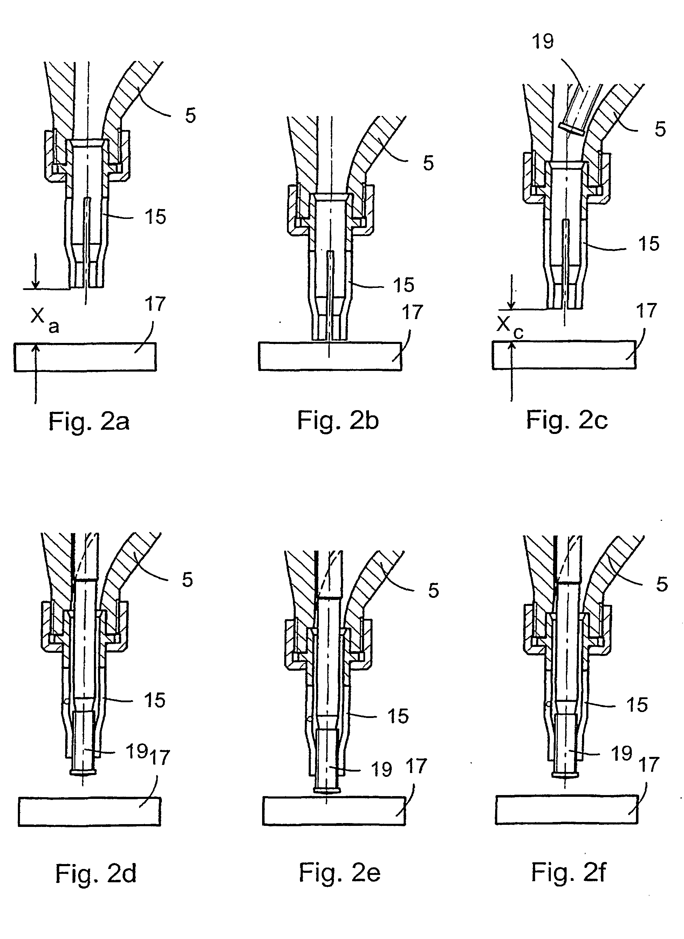

Hierzu zeigt Fig. 2 verschiedene Phasen bzw. einzelne Schritte eines Schweißvorgangs, wobei jeweils nur der vordere Bereich der Schweißachse 5 dargestellt ist, sowie das Werkstück 17, auf welches ein oder mehrere zu verschweißende Teile aufgeschweißt werden sollen.

Die in Fig. 2a dargestellte Phase zeigt die bereits in Bezug auf das Werkstück 5 positionierte Schweißachse 5. Die in Fig. 2a dargestellte Position kann dabei entweder durch eine Ansteuerung des Antriebs 7 für die Schweißachse 5 oder durch eine Ansteuerung des Antriebs 11 für den Roboterarm 9 angefahren werden.

Dabei sei an dieser Stelle erwähnt, dass die Ansteuerung des Antriebs 11 für den Roboterarm 9 nicht nur von der Auswerte- und Steuereinheit 13, wie in Fig. 1 dargestellt, erfolgen kann, sondern selbstverständlich auch durch eine selbständige Auswerte- und Steuereinheit für den Roboterarm. Die beiden Steuereinheiten können hierzu selbstverständlich miteinander kommunizieren, um einen korrekten und möglichst effizienten Ablauf des Schweißvorgangs zu gewährleisten.

Bei der in Fig. 2a dargestellten Position der Schweißachse 5 weist die Stirnseite des Bolzenhalters 15 einen Abstand X_{c} von der Oberfläche des Werkstücks 17 auf. Ausgehend von dieser Position wird die Schweißachse 5 solange auf die Werkstückoberfläche zubewegt, bis die Stirnseite des Bolzenhalters 15 mit der Werkstückoberfläche in Kontakt steht. Diese Phase ist in Fig. 2b dargestellt. Das Bewegen der Schweißachse kann durch einen der beiden Antriebe 7 oder 11 erfolgen. Vorzugsweise wird man die Bewegung jedoch mittels des Antriebs 7 vornehmen, da dieser in der Regel eine genauere Positionierung der Schweißachse 5 in deren axialer Richtung ermöglicht.

Das Detektieren eines Kontakts zwischen der Stirnfläche des Bolzenhalters 15 und der Oberfläche des Werkstücks 17 kann in der Weise erfolgen, dass zwischen dem Werkstück 17 und dem Bolzenhalter 5 eine Messspannung angelegt wird. Sobald ein Stromfluß detektiert wird, ist von einem elektrischen Kontakt zwischen Bolzenhalter und Werkstück auszugehen, wobei nach dem Detektieren eines Stromflusses der Antrieb 7 (bzw. gegebenenfalls der Antrieb 11) stillgesetzt wird.

Das Detektieren eines Kontakts zwischen dem Bolzenhalter 15 und dem Werkstück 17 kann jedoch beispielsweise auch durch das Messen der Antriebsleistung des jeweiligen Antriebs, vorzugsweise des Antriebs 7, erfolgen. Sobald die Antriebsleistung in Folge eines mechanischen Kontakts zwischen Werkstück und Bolzenhalter sprunghaft ansteigt, wird von einem mechanischen Kontakt ausgegangen und der Antrieb stillgesetzt.

Eine derartige Auswertung zur Erfassung eines elektrischen oder mechanischen Kontakts kann in üblicherweise durch die Auswerte- und Steuereinheit vorgenommen werden. Wie bereits vorstehend erwähnt, wird für das Detektieren eines elektrischen Kontakts eine elektrisch leitende Verbindung zwischen dem Werkstück und der Auswerte- und Steuereinheit 13 hergestellt. Des Weiteren muss selbstverständlich eine elektrisch leitende Verbindung zwischen der Auswerte- und Steuereinheit 13 und dem Bolzenhalter bestehen. Diese elektrischen Verbindungen sind jedoch ohnehin nötig, da die Auswerte- und Steuereinheit 13 üblicherweise auch für das Zuführen eines Schweißstroms ausgebildet ist.

Für das Detektieren eines mechanischen Kontakts kann die Auswerte- und Steuereinheit 13 ebenfalls die Leistungsaufnahme des Antriebs 7 bzw. des Antriebs 11 erfassen. Hierzu können in der Auswerte- und Steuereinheit 13 geeignete Mittel vorgesehen sein. Nach dem Aufsetzen des Bolzenhalters auf die Oberfläche gemäß Fig. 2 steuert die Auswerte- und Steuereinheit 13 den Antrieb 7 (alternativ 11) so an, dass die Stirnseite des Bolzenhalters 15 um einen definierten Abstand X_{c} von der Werkstückoberfläche abgehoben wird.

Anschließend kann ein zu verschweißendes Teil 19 über den Zuführkanal 21 der Schweißachse zugeführt werden. Hierzu kann die Auswerte- und Steuereinheit 13 ein Signal an eine nicht dargestellte Steuereinheit für eine selbsttätige Zuführvorrichtung abgeben. Nach dem Zuführen des zu verschweißenden Teils 19 wird dieses mittels des Ladestifts 23 im Bolzenhalter 15 nach vorne bewegt, bis die Schweißposition erreicht ist. Diese Position bzw. Phase des Schweißvorgangs ist in Fig. 2d dargestellt.

Selbstverständlich muss dafür gesorgt werden, dass der Abstand X_{c} der Stirnseite des Bolzenhalters 15 von der Werkstückoberfläche in den Fig. 2c größer oder gleich ist dem Überstand d, um welchen die Stirnseite des zu verschweißenden Teils 19 über die Stirnseite des Bolzenhalters 15 hinausragt.

Im nächsten Schritt wird die Schweißachse 5 wiederum auf die Werkstückoberfläche zu bewegt, bis ein Kontakt zwischen der Stirnseite des zu verschweißenden Teils 19 und der Werkstückoberfläche detektiert wird. Das Detektieren des Kontakts kann, wie vorstehend beschrieben, wiederum durch das Detektieren eines elektrischen oder mechanischen Kontakts erfolgen.

Insbesondere für das Detektieren eines mechanischen Kontakts ist es von Bedeutung, dass der Ladestift 23 die Rückseite des zu verschweißenden Teils 19 beaufschlagt, um dieses auch bei einem Aufsetzen dessen Stirnseite auf die Werkstückoberfläche in der Schweißposition zu halten.

Ist keine ständige Beaufschlagung vorgesehen (was grundsätzlich möglich ist), so muss nach dem Aufsetzen und erneuten Abheben, wie unten beschrieben, mittels einer erneuten Bewegung des Ladestifts 23 dafür gesorgt werden, dass das zu verschweißende Teil 19 erneut bis in die Schweißposition nach vorne geschoben wird.

Die Auswerte- und Steuereinheit 13 erfasst den Weg (X_{c} - d), um welchen die Schweißachse 5 beim Übergang von der Phase gemäß Fig. 2d in die Phase gemäß Fig. 2e bewegt werden muss. Ist die erfasste Wegstrecke kleiner als der zuvor eingestellte Abstand X_{c}, so geht die Auswerte- und Steuereinheit vom Vorhandensein eines zu verschweißenden Teils 19 im Bolzenhalter 15 aus.

Um Toleranzen bei der Bewegung der Schweißachse zu kompensieren, kann die Auswerte- und Steuereinheit 13 selbstverständlich auch die Differenz zwischen dem zuvor eingestellten Abstand X_{c} und der vorbestimmten Schwelle wird dann vom Vorhandensein eines zu verschweißenden Teiles ausgegangen.

Stellt die Auswerte- und Steuereinheit 13 dagegen fest, dass die erfasste Wegstrecke im Wesentlichen gleich dem zuvor eingestellten Abstand X_{c} ist (bzw. dass die Differenz zwischen dem Abstand X_{c} und dem erfassten Weg kleiner ist als eine vorbestimmte Schwelle), so wird vom Fehlen eines zu verschweißenden Teiles im Bolzenhalter ausgegangen.

Die Differenz zwischen dem Abstand X_{c} und der zurückgelegten Wegstrecke beim Übergang zwischen den Phasen gemäß den Fig. 2d und 2e kann jedoch nicht nur im Sinne des Vorhandenseins oder Nichtvorhandenseins eines zu verschweißenden Teils ausgewertet werden, sondern auch im Hinblick auf eine korrekte axiale Position des zu verschweißenden Teils 19 im Bolzenhalter 15. Beispielsweise kann eine korrekte Position dann angenommen werden, wenn die Differenz zwischen dem Abstand X_{c} und der zurückgelegten Wegstrecke innerhalb eines vorbestimmten Bereichs liegt.

Wird dagegen vorausgesetzt, dass mittels des Ladestifts 23 der Bolzen in die korrekte Lage innerhalb des Bolzenhalters 15 geschoben wurde, so kann bei Verwendung unterschiedlich langer Bolzen darauf geschlossen werden, ob ein Bolzen der gewünschten Länge im Bolzenhalter vorliegt. Denn ein längerer Bolzen wird ohne eine Verstellung der vorderen Endposition des Ladestifts 23 weiter über das vordere Ende des Bolzenhalters hervorstehen (d.h. es wird eine geringere Strecke X_{c} - d dektektiert) als ein kürzerer Bolzen.

Wird das Fehlen eines zu verschweißenden Teils 19 oder eine nicht korrekte axiale Position im Bolzenhalter detektiert, so kann entweder ein Fehlersignal bzw. Bedienerrufsignal erzeugt werden, oder es können Maßnahmen zur Behebung des Fehlers ergriffen werden. Beispielsweise kann bei einem Detektieren eines Fehlens eines zu verschweißenden Teils 19 ein erneuter Zuführvorgang ausgelöst werden.

Wird ein Vorhandensein und gegebenenfalls ein korrekter Sitz eines zu verschweißenden Teils 19 im Bolzenhalter 15 festgestellt, so kann in der in Fig. 2e dargestellten Phase der eigentliche Schweißvorgang ausgelöst werden. Beispielsweise kann beim Schweißen mit Hubzündung der Vorstrom eingeschaltet werden und anschließend die Schweißachse 5, wie in Fig. 2f dargestellt, um einen vorbestimmten Abhub von der Werkstückoberfläche abgehoben werden, so dass der Vorstromlichtbogen gezogen wird. Anschließend kann dann der Hauptstromlichtbogen gestartet und die Schweißachse nach einer vorbestimmten Schweißzeit auf das Werkstück zubewegt und in die Schmelze eingetaucht werden.

In der Praxis kann der Fall auftreten, dass aus bestimmten Gründen bereits vor dem Zuführen eines zu verschweißenden Teils 19 in den Bolzenhalter 15 ein weiteres zu verschweißendes Teil in diesem gehalten ist.

Bei dem in Fig. 2 dargestellten Verfahren würde dies in der Phase gemäß Fig. 2d dazu führen, dass beim Zuführen eines weiteren zu verschweißenden Teils das bereits im Bolzenhalter 15 enthaltene Teil weiter nach vorne, d.h. in Richtung auf die Werkstückoberfläche zu bewegt würde. Ist die Länge des zu verschweißenden Teils 19 größer als der zuvor eingestellte Abstand X_{c}, so führt dies zu einem Kontakt zwischen der Stirnseite des bereits zuvor vorhandenen zu verschweißenden Teils und der Werkstückoberfläche. Dieser kann wiederum detektiert werden. Stellt die Auswerte- und Steuereinheit 13 bereits beim Ladevorgang, d.h. während der Bewegung des Ladestifts 23 mittels des Antriebs 25 einen elektrischen oder mechanischen Kontakt fest, so wird dies als der zuvor geschilderte Fehler interpretiert. In diesem Fall kann die Schweißachse 5 um einen Abstand von der Werkstückoberfläche abgehoben werden, bei welchem durch das erneute oder weitere Ansteuern des Ladestifts 23 ein Ausstoßen des bereits im Bolzenhalter 15 gehaltenen zu verschweißenden Teils ermöglicht ist. Selbstverständlich kann hierzu auch der Antrieb 11 so angesteuert werden, dass der Bolzenschweißkopf an einen Ort bewegt wird, an welchem ein Ausstoßen des bereits vorhandenen zu verschweißenden Teils gefahrlos möglich ist.

Anstelle eines Positionierens der Schweißachse in einem Abstand X_{c} von der Werkstückoberfläche gemäß Fig. 2a kann dieses Verfahren so abgewandelt werden, dass die Schweißachse bzw. der gesamte Schweißkopf mittels des Antriebs 11 zunächst soweit in Richtung auf die Werkstückoberfläche zubewegt wird, bis sich Bolzenhalter und Werkstückoberfläche berühren. An diesem Punkt wird der Antrieb 11 jedoch noch nicht gestoppt, sondern weiter in Richtung auf das Werkstück zubewegt, bis eine vorgegebene absolute Position des Schweißkopfs 5 erreicht ist. Um eine derartige Bewegung nach dem Berühren von Bolzenhalter und Werkstück zu ermöglichen, kann der Antrieb 7 so ausgebildet und in einen solchen Zustand gesteuert werden, dass ein axiales Verschieben der Schweißachse 5 in Folge der weiteren Bewegung des Antriebs 11 möglich ist. Mit anderen Worten, nach dem erstmaligen Kontakt von Bolzenhalter und Werkstück wird der Antrieb 11 so weiter bewegt, dass sich der gesamte Schweißkopf weiter in axialer Richtung bewegt. Diese Bewegung wird durch eine axiale Gegenbewegung der Schweißachse 5 gegenüber dem Antrieb 7 kompensiert. Auch auf diese Weise kann die Position gemäß Fig. 2b erreicht werden. Hierzu ist es jedoch nicht erforderlich, einen Kontakt zwischen dem Bolzenhalter und dem Werkstück zu detektieren. Vielmehr kann die Bewegung des Antriebs 11 für den Bolzenschweißkopf 3 so erfolgen, dass trotz Toleranzen bei der Positionierung des Werkstücks 17 und der Bewegung des Roboterarms 9 bzw. des gesamten Schweißkopfs 3 sicher eine (absolute räumliche) Position eingenommen wird, in welcher sich die Stirnseite des Bolzenhalters 15 und die Oberfläche des Werkstücks 17 berühren.

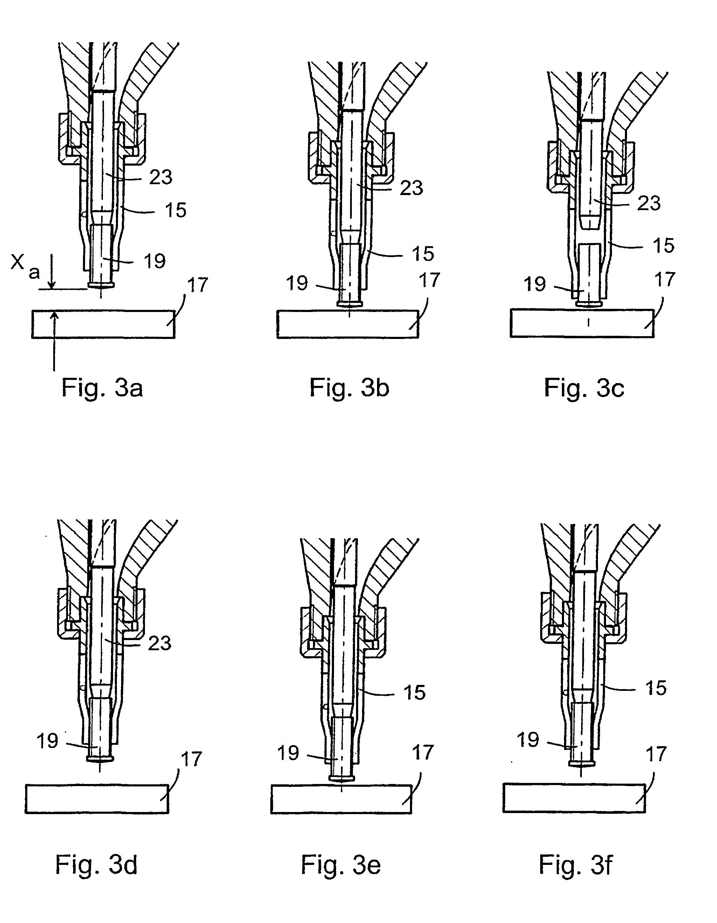

Fig. 3 zeigt verschiedene Phasen a bis f eines weiteren Verfahrens nach der Erfindung. Bei diesem Verfahren wird die Schweißachse bzw. der gesamte Bolzenschweißkopf im ersten Schritt wiederum so positioniert, dass ein Abstand X_{c} zwischen einem bereits im Bolzenhalter 15 gehaltenen zu verschweißenden Teil 19 und der Werkstückoberfläche vorliegt. Im nächsten Schritt wird vorzugsweise mittels des Antriebs 7 die Schweißachse 5 solange auf das Werkstück 17 zu bewegt, bis ein Kontakt detektiert wird. Das Detektieren des Kontakts kann in der vorstehend erläuterten Weise erfolgen. Nach dem Detektieren des Kontakts gemäß gemäß Fig. 3b wird der Ladestift 23, welcher zunächst das zu verschweißende Teil 19 in seiner Position gehalten hat, zurückbewegt. Anschließend wird ein weiterer Versuch unternommen, die Schweißachse 5 weiter in Richtung auf das Werkstück 17 zuzubewegen. Da das zu verschweißende Werkstück 19 nicht mehr vom Ladestift 23 beaufschlagt wird, ist dies dann möglich, wenn tatsächlich ein zu verschweißendes Teil im Bolzenhalter 15 gehalten ist. Andernfalls würde die Stirnseite des Bolzenhalters auf der Werkstückoberfläche aufliegen und eine derartige weitere Bewegung blockieren.

Stellt die Auswerte- und Steuereinheit, die den gesamten Bewegungsablauf steuert, fest, dass eine derartige weitere Bewegung in Richtung auf die Werkstückoberfläche möglich ist, so wird davon ausgegangen, dass tatsächlich ein zu verschweißendes Teil im Bolzenhalter 15 gehalten ist. Hierzu kann die Auswerte- und Steuereinheit selbstverständlich detektieren, ob eine Bewegung der Schweißachse 5 um eine Wegstrecke möglich ist, die größer ist als ein vorbestimmter Schwellwert.

Gleichzeitig mit dem Start des Versuchs der weiteren Bewegung in Richtung auf das Werkstück detektiert die Auswerte- und Steuereinheit das mögliche Vorliegen eines "starren mechanischen Kontakts", der dann gegeben ist, wenn der Bolzenhalter selbst auf dem Werkstück aufsteht. Dies kann wiederum durch die Erfassung der Leistungsaufnahme des Antriebs 7 bzw. 11 erfolgen, je nachdem, welcher der beiden Antriebe für die Bewegung eingesetzt wird. Vorzugsweise wird dies jedoch der Antrieb 7 für die Schweißachse sein.

Wird ein mechanischer Kontakt detektiert, ohne dass eine Bewegung der Schweißachse oder des Schweißkopfs in Richtung auf das Werkstück möglich war, so geht die Steuereinheit 13 davon aus, dass kein zu verschweißendes Teil im Bolzenhalter 15 gehalten ist. In diesem Fall kann der Vorgang abgebrochen und ein Fehlersignal bzw. Bedienerrufsignal erzeugt werden oder es kann der Schweißkopf um einen ausreichenden Betrag vom Werkstück abgehoben und ein Zuführvorgang für ein zu verschweißendes Teil 19 ausgelöst werden.

An dieser Stelle sei nochmals ausdrücklich darauf hingewiesen, dass ein mechanischer Kontakt auch dadurch festgestellt werden kann, dass im Bolzenhalter bzw. in der Schweißachse unüblich hohe Kräfte auftreten. Hierzu kann die Auswerte- und Steuereinheit das Signal eines Kraft- oder Dehnungssensors auswerten.

Hat die Auswerte- und Steuereinheit 13 das Vorhandensein eines zu verschweißenden Teils 19 im Bolzenhalter 15 erkannt, so kann die Schweißachse bzw. der Schweißkopf vom Werkstück abgehoben und der Antrieb 25 so angesteuert werden, dass das zu verschweißende Teil wieder in seine Schweißlage nach vorne geschoben wird. Diese Phase zeigt Fig. 3d.

Anschließend kann der Schweißkopf wieder so lange in Richtung auf das Werkstück 17 zu bewegt werden, bis die Auswerte- und Steuereinheit 13 einen Kontakt detektiert. Anschließend kann eines der üblichen Schweißverfahren gestartet werden. Beispielsweise kann für das Hubzündungsverfahren in der Phase gemäß Fig. 3e der Vorstrom eingeschaltet werden, so dass nach dem Abheben der Schweißachse um den Abhub h gemäß Fig. 3f der Vorstromlichtbogen gezündet wird.

Mit dem in Fig . 3 dargestellten Verfahren kann ebenfalls eine Entscheidung getroffen werden, ob bei Verarbeitung unterschiedlich langer Bolzen ein Bolzen der richtigen Länge im Bolzenhalter gehalten ist: Hierzu wird die Schweißachse 5 ab dem Kontakt des Bolzens mit dem Werkstück und dem Zurückziehen des Ladestifts 23 oder dem Freigeben dessen axialer Bewegungsmöglichkeit weiter auf das Werkstück zu bewegt, bis ein Kontakt zwischen Bolzenhalter 15 und dem Werkstück detektiert wird (z.B. durch das Erfassen der Leistungsaufnahme des Antriebs). Der Bewegungsweg zwischen dem Kontakt zwischen Bolzen und Werkstück und dem Kontakt zwischen Bolzenhalter und Werkstück entspricht dem Überstand d des Bolzens im Bolzenhalter. Dieser ist - ohne ein Verändern der vorderen Endposition des Ladestifts - bei Vorhandensein eines längeren Bolzens größer als bei kürzeren Bolzen.

Auf diese Weise ermöglicht die Erfindung in den vorstehend beschriebenen Ausgestaltungen eine sichere Entscheidung, ob ein zu verschweißendes Teil im Bolzenhalter gehalten ist. Insbesondere beim Schweißen ohne Stützfuß kann hierdurch sicher vermieden werden, dass beim Fehlen eines zu verschweißenden Teils der Bolzenhalter selbst auf das Werkstück aufgeschweißt wird. Auch bei üblichen Schweißverfahren mit Stützfuß kann verhindert werden, dass zwischen der Stirnseite des Bolzenhalters und der Werkstückoberfläche ein Lichtbogen gezündet und damit der Bolzenhalter beschädigt wird. Des Weiteren kann auf eine korrekte Position des Bolzens im Bolzenhalter bzw. auf das Vorhandensein eines Bolzens der gewünschten richtigen Länge geschlossen werden.

## Patentansprüche

1. Bolzenschweißverfahren, insbesondere für das Bolzenschweißen ohne Stützfuß, für das Anschweißen eines in einem Bolzenhalter (15) eines Bolzenschweißkopfs (3) gehaltenen zu verschweißenden Teils (19) mit einem Werkstück (17), **gekennzeichnet durch** folgende Schritte:
a) Bewegen des Bolzenhalters (15) ohne ein in diesem gehaltenes zu verschweißendes Teil (19) in Richtung auf die Werkstückoberfläche zumindest bis ein Kontakt zwischen der Stirnseite des Bolzenhalters (15) und der Werkstückoberfläche gegeben ist;
b) Abheben des Bolzenhalters (15) vom Werkstück (17) bis ein vorbestimmter Abstand (X_{c}) zwischen der Stirnseite des Bolzenhalters (15) und der Werkstückoberfläche erreicht ist;
c) Zuführen eines zu verschweißenden Teils (19) in den Bolzenhalter (15) so, dass die Stirnseite des zu verschweißenden Teils (19) um einen vorbestimmten Überstand (d) über die Stirnseite des Bolzenhalters (15) hinausragt;
d) Erneutes Bewegen des Bolzenhalters (15) in Richtung auf die Werkstückoberfläche bis ein Kontakt zwischen der Stirnseite des zu verschweißenden Teils (19) mit der Werkstückoberfläche detektiert wird und Erfassen der Wegstrecke, die der Bolzenhalter (15) oder ein damit gekoppeltes Element aus der nach Schritt b) erreichten Position bis zum Detektieren des Kontakts bewegt wurde;
e) Vergleichen erfassten Wegstrecke mit dem gemäß Schritt b) gesetzten Abstand, wobei das Vorhandensein eines zu verschweißenden Teils (19) angenommen wird, wenn die erfasste Wegstrecke zumindest um einen vorbestimmten Betrag kleiner ist als der gesetzte Abstand (X_{c});
f) Durchführen des Schweißvorgangs, falls das Vorhandensein eines zu verschweißenden Teils (19) detektiert wurde.

2. Verfahren nach Anspruch 1, **dadurch gekennzeichnet, dass** das Vorhandensein des zu verschweißenden Teils (19) in einer für einen Schweißvorgang zulässigen Position im Bolzenhalter (15) angenommen wird, wenn die Differenz zwischen dem gesetzten Abstand (X_{c}) und der erfassten Wegstrecke innerhalb eines vorgegebenen Bereichs liegt.

3. Verfahren nach Anspruch 1 oder 2, **dadurch gekennzeichnet, dass** die Bewegung gemäß Merkmal a) des Anspruchs 1 nur solange ausgeführt wird, bis ein Kontakt zwischen Bolzenhalter (15) und Werkstück (17) detektiert wird.

4. Verfahren nach einem der Ansprüche 1 bis 3, **dadurch gekennzeichnet, dass** das Detektieren des Kontakts zwischen dem Bolzenhalter (15) und der Werkstückoberfläche und/oder das Detektieren des Kontakts zwischen dem zu verschweißenden Teil (19) und der Werkstückoberfläche durch das Detektieren eines elektrischen oder mechanischen Kontakts erfolgt.

5. Verfahren nach einem der vorhergehenden Anspruche, **dadurch gekennzeichnet, dass** zumindest alle Bewegungen des Bolzenhalters (15) gemäß den Merkmalen b) und d) des Anspruchs 1 durch einen im Bolzenschweißkopf (3) vorgesehenen Antrieb (7) für den Bolzenhalter (15) oder eines damit gekoppelten Elements bewirkt werden.

6. Verfahren nach einem der vorhergehenden Ansprüche, **dadurch gekennzeichnet, dass** der Bolzenschweißkopf (3) vor der Durchführung der Schritte gemäß Anspruch 1 mittels eines Positionierantriebs (11) so in Bezug auf das Werkstück (17) positioniert wird, dass zwischen der Stirnseite des Bolzenhalters (15) und der Werkstückoberfläche, vorzugsweise an der gewünschten Schweißstelle, ein Abstand (X_{c}) gegeben ist.

7. Verfahren nach Anspruch 6, **dadurch gekennzeichnet, dass** auch die Bewegung der Bolzenhalters (15) gemäß Merkmal a) des Anspruchs 1 mittels des im Bolzenschweißkopf (3) vorgesehenen Antriebs (7) für den Bolzenhalter (15) oder eines damit gekoppelten Elements bewirkt wird.

8. Verfahren nach einem der Ansprüche 1 bis 5, **dadurch gekennzeichnet, dass** die Bewegung des Bolzenhalters (15) gemäß Merkmal a) des Anspruchs 1 mittels eines Positionierantriebs (11) für den Bolzenschweißkopf (3) erfolgt, wobei die Bewegung des Schweißkopfs (3) gesteuert oder geregelt in eine Position erfolgt, in der mit ausreichender Sicherheit ein Kontakt zwischen der Stirnseite des Bolzenhalters (15) und der Werkstückoberfläche gegeben ist.

9. Verfahren nach Anspruch 8, **dadurch gekennzeichnet, dass** die Bewegung des Bolzenschweißkopfs (3) in Richtung auf das Werkstück (17) so erfolgt, dass der Bolzenhalter (15) aus einer Ausgangsposition in Richtung in den Bolzenschweißkopf (3) hinein bewegt wird, wobei der Antrieb (7) für den Bolzenhalter (15) oder ein damit gekoppeltes Element eine derartige Bewegung zulässt, und dass die Bewegungen des Bolzenhalters gemäß den Merkmalen b) und d) des Anspruchs 1 durch den Antrieb (7) für den Bolzenhalter (15) oder ein damit gekoppeltes Element bewirkt werden.

10. Bolzenschweißverfahren, insbesondere für das Bolzenschweißen ohne Stützfuß, für das Anschweißen eines in einem Bolzenhalter (15) eines Bolzenschweißkopfs (3) gehaltenen zu verschweißenden Teils (19) mit einem Werkstück (17) **gekennzeichnet durch** folgende Schritte:
a) Bewegen des Bolzenhalters (15) mit einem in diesem gehaltenen zu verschweißendes Teil (19) in Richtung auf die Werkstückoberfläche zumindest bis ein Kontakt zwischen der Stirnseite des zu verschweißenden Teils (19) und der Werkstückoberfläche gegeben ist, wobei das zu verschweißende Teil (19) derart in einer Position im Bolzenhalter (15) gehalten wird, dass die Stirnseite des zu verschweißenden Teils (19) um einen vorbestimmten Überstand (d) über die Stirnseite des Bolzenhalters (15) hinausragt;
b) Versuch den Bolzenhalter (15) weiter in Richtung auf das Werkstück (17) zu bewegen und Detektieren einer möglichen weiteren Bewegung;
c) Annahme des Vorhandensein eines zu verschweißenden Teils (19), wenn eine weitere Bewegung des Bolzenhalters (15) und damit eine axiale Bewegung des zu verschweißenden Teils (19) in den Bolzenhalter (15) hinein um mindestens eine vorbestimmte Wegstrecke möglich war;
d) Abheben des Bolzenhalters (15) und damit der Stirnseite des zu verschweißenden Teils (19) um einen vorbestimmten Abstand von der Werkstückoberfläche;
e) Bewegen des zu verschweißenden Teils (19) in die Ausgangsposition im Bolzenhalter;
f) Durchfiihren des Schweißvorgangs, falls das Vorhandensein eines zu verschweißenden Teils (19) detektiert wurde.

11. Verfahren nach Anspruch 10, **dadurch gekennzeichnet, dass** bei einem Bewegungsversuch gemäß Merkmal c) des Anspruchs 10 die Leistungsaufnahme eines Antriebs (7; 11) für den Bolzenhalter (15) oder den Schweißkopf (3) oder die bei dem Bewegungsversuch im Bolzenhalter (15) oder einem damit gekoppelten Element in diesem wirkende Anpresskraft erfasst wird und dass bei einem Detektieren einer eine vorbestimmte Schwelle übersteigenden Leistungsaufnahme oder Anpresskraft der Bewegungsversuch abgebrochen wird.

12. Verfahren nach Anspruch 10 oder 11, **dadurch gekennzeichnet, dass** zwischen den Schritten e) und f) des Anspruchs 10 eine erneute Abstandspositionierung des Bolzenhalters (15) und damit der Stirnseite des zu verschweißenden Teils (19) von der Werkstückoberfläche vorgenommen wird, die vorzugsweise durch das Bewegen des Bolzenhalters (15) in Richtung auf das Werkstück (17) erfolgt, bis ein Kontakt zwischen dem zu verschweißenden Teil (19) und dem Werkstück (17) detektiert wird, und ein anschließendes Abheben des Bolzenhalters (15) um eine vorbestimmte Wegstrecke.

13. Verfahren nach einem der Ansprüche 1 bis 9, **dadurch gekennzeichnet, dass** beim Zuführen des zu verschweißenden Teils (19) dessen Kontakt mit der Werkstückoberfläche überwacht wird und dass bei Detektieren eines Kontakts bereits beim Zuführvorgang auf das Vorhandensein eines bereits vor dem Zuführvorgang im Bolzenhalter gehaltenes zu verschweißendes Teil (19) geschlossen und vorzugsweise der Zuführvorgang gestoppt wird.

14. Verfahren nach Anspruch 13, **dadurch gekennzeichnet, dass**, falls erforderlich, der Bolzenhalter (15) um in Position bewegt wird, in der durch ein erneutes Starten der Zuführbewegung des zu verschweißenden Teils (19) für dessen Zuführen in die Ausgangsposition im Bolzenhalter (15) das bereits vorhandene zu verschweißende Teil (19) ausgestossen werden kann.

15. Bolzenschweißvorrichtung zur Durchführung des Verfahrens nach einem der vorhergehenden Ansprüche,
a) mit einem Bolzenschweißkopf (3) mit einem Antrieb (7) für einen Bolzenhalter (15) oder ein damit gekoppeltes Element,
b) mit Mitteln zum Detektieren eines elektrischen oder mechanischen Kontakts zwischen dem Bolzenhalter (15) und einem Werkstück (17) oder einem im Bolzenhalter (15) gehaltenen zu verschweißenden Teil (19) und dem Werkstück und
c) einer Auswerte- und Steuereinheit (13) welche mit dem Antrieb (7) für den Bolzenhalter (15) und den Mitteln zum Detektieren eines elektrischen oder mechanischen Kontakts verbunden ist,
**dadurch gekennzeichnet**,
d) dass die Auswerteeinheit (13) so ausgebildet ist, dass sie den Antrieb (7) für den Bolzenhalter und die Mittel zum Detektieren eines elektrischen oder mechanischen Kontakts entsprechend den Verfahrensschritten nach einem der vorhergehenden Ansprüche ansteuert.

16. Vorrichtung nach Anspruch 15, **dadurch gekennzeichnet, dass** die Mittel zum Detektieren eines elektrischen oder mechanischen Kontakts eine Einheit zur Erfassung der elektrischen Antriebsleistung des Antriebs (7) für den Bolzenhalter oder eines damit gekoppelten Parameters erfassen.

17. Vorrichtung nach Anspruch 15 oder 16, **dadurch gekennzeichnet, dass** ein Antrieb (11) zur Bewegung des gesamten Schweißkopfs (3) vorgesehen ist, welcher vorzugsweise von der Auswerte- und Steuereinheit (13) ansteuerbar ist.

18. Computerprogramm mit Programmcodemitteln, um alle Schritte nach dem Verfahren nach einem der Ansprüche 1 bis 14 durchzuführen, wenn das Programm in einer eine Mikroprozessorsteuerung umfassenden Auswerte- und Steuereinheit (13) ausgeführt wird.

19. Computerprogramm mit Programmcodemitteln nach Anspruch 18, die auf einem Datenträger gespeichert sind.

## Claims

1. Stud welding process, in particular for stud welding without a supporting foot, for welding a part (19) to be welded held in a stud holder (15) of a stud welding head (3) to a workpiece (17), **characterized by** the following steps:
a) movement of the stud holder (15) without a part (19) to be welded held in it onto the workpiece surface at least until a contact exists between the end face of the stud holder (15) and the workpiece surface;
b) lifting of the stud holder (15) off the workpiece (17) until a predetermined spacing (X_{c}) is reached between the end face of the stud holder (15) and the workpiece surface;
c) feeding of a part (19) to be welded into the stud holder (15) in such a way that the end face of the part (19) to be welded projects by a predetermined projecting length (d) beyond the end face of the stud holder (15);
d) renewed movement of the stud holder (15) in the direction of the workpiece surface until a contact is detected between the end face of the part (19) to be welded and the workpiece surface and determination of the distance that the stud holder (15) or an element coupled thereto was moved from the position reached after step b) until the contact was detected;
e) comparison of the distance determined with the spacing set in accordance with step b), the presence of a part (19) to be welded being assumed if the distance determined is less than the set spacing (X_{c}) at least by a predetermined amount;
f) performance of the welding operation if the presence of a part (19) to be welded was detected.

2. Process according to Claim 1, **characterized in that** the presence of the part (19) to be welded is assumed in a position, permissible for a welding operation, in the stud holder (15) if the difference between the set spacing (X_{c}) and the distance determined is within a specified range.

3. Process according to Claim 1 or 2, **characterized in that** the movement in accordance with feature a) of Claim 1 is executed only until a contact is detected between stud holder (15) and workpiece (17).

4. Process according to any one of Claims 1 to 3, **characterized in that** the contact between the stud holder (15) and the workpiece surface and/or the contact between the part (19) to be welded and the workpiece surface is detected by the detection of an electrical or mechanical contact.

5. Process according to any one of the preceding claims, **characterized in that** at least all the movements of the stud holder (15) in accordance with features b) and d) of Claim 1 are brought about by a drive (7) for the stud holder (15) in the stud welding head (3) or an element coupled thereto.

6. Process according to any one of the preceding claims, **characterized in that** the stud welding head (3) is positioned, prior to performing the steps in accordance with Claim 1, by means of a positioning drive (11) in relation to the workpiece (17) in such a way that a spacing (X_{c}) exists between the end face of the stud holder (15) and the workpiece surface, preferably at the desired welding position.

7. Process according to Claim 6, **characterized in that** the movement of the stud holder (15) in accordance with feature a) of Claim 1 is also brought about by means of the drive (7), provided in the stud welding head (3), for the stud holder (15) or an element coupled thereto.

8. Process according to any one of Claims 1 to 5, **characterized in that** the stud holder (15) is moved in accordance with feature a) of Claim 1 by means of a positioning drive (11) for the stud welding head (3), the welding head (3) being moved under open-loop or closed-loop control into a position in which a contact exists with adequate reliability between the end face of the stud holder (15) and the workpiece surface.

9. Process according to Claim 8, **characterized in that** the stud welding head (3) is moved in the direction of the workpiece (17) in such a way that the stud holder (15) is moved from a starting position in the direction of the stud welding head (3), the drive (7) for the stud holder (15) or an element coupled thereto permitting such a movement, and **in that** the movements of the stud holder in accordance with features b) and d) of Claim 1 are brought about by the drive (7) for the stud holder (15) or an element coupled thereto.

10. Stud welding process, in particular for stud welding without a supporting foot, for welding to a workpiece (17) a part (19) to be welded held in a stud holder (15) of a stud welding head (3), **characterized by** the following steps:
a) movement of the stud holder (15) with a part (19) to be welded held in it in the direction of the workpiece surface at least until a contact exists between the end face of the part (19) to be welded and the workpiece surface, the part (19) to be welded being held in a position in the stud holder (15) that is such that the end face of the part (19) to be welded projects by a predetermined projecting length (d) beyond the end face of the stud holder (15);
b) attempting to move the stud holder (15) further in the direction of the workpiece and detecting a possible further movement;
c) assumption of the presence of a part (19) to be welded if a further movement of the stud holder (15) and, consequently, an axial movement of the part (19) to be welded into the stud holder (15) by at least a predetermined distance was possible;
d) lifting of the stud holder (15) and, consequently, the end face of the part (19) to be welded by a predetermined spacing from the workpiece surface;
e) movement of the part (19) to be welded into the starting position in the stud holder;
f) performance of the welding operation if the presence of a part (19) to be welded was detected.

11. Process according to Claim 10, **characterized in that** in a movement attempt in accordance with feature c) of claim 10, the power consumption is determined of a drive (7; 11) for the stud holder (15) or the welding head (3) or the contact pressure is determined that acts in the stud holder (15) during the movement attempt or acts in an element coupled thereto and **in that**, if a power consumption or contact pressure is detected that exceeds a predetermined threshold, the movement attempt is discontinued.

12. Process according to Claim 10 or 11, **characterized in that**, between steps e) and f) of Claim 10, a renewed spacing positioning of the stud holder (15) and, consequently, of the end face of the part (19) to be welded from the workpiece surface is performed, which spacing positioning preferably takes place by moving the stud holder (15) in the direction of the workpiece (17) until a contact is detected between the part (19) to be welded and the workpiece (17) and a subsequent lifting of the stud holder (15) by a predetermined distance.

13. Process according to any one of Claims 1 to 9, **characterized in that**, when the part (19) to be welded is presented, its contact with the workpiece surface is monitored and **in that**, when a contact is already detected during the feed operation, the presence of a part (19) to be welded already held in the stud holder before the feed operation is inferred and the feed operation is preferably stopped.

14. Process according to Claim 13, **characterized in that**, if necessary, the stud holder (15) is moved into a position in which the part (19) to be welded already present can be ejected by restarting the feed movement of the part (19) to be welded to feed it into the starting position in the stud holder (15).

15. Stud welding device for performing the process according to any one of the preceding claims,
a) having a stud welding head (3) with a drive (7) for a stud holder (15) or an element coupled thereto,
b) having means for detecting an electrical or mechanical contact between the stud holder (15) and a workpiece (17) or a part (19) to be welded held in the stud holder (15) and the workpiece, and
c) an evaluation and control unit (13) that is connected to the drive (7) for the stud holder (15) and the means for detecting an electrical or mechanical contact,
**characterized**
d) **in that** the evaluation unit (13) is designed in such a way that it activates the drive (7) for the stud holder and the means for detecting an electrical or mechanical contact in accordance with the process steps according to any one of the preceding claims.

16. Device according to Claim 15, **characterized in that** the means for detecting an electrical or mechanical contact comprises a unit for determining the electrical drive power of the drive (7) for the stud holder or a parameter coupled thereto.

17. Device according to Claim 15 or 16, **characterized in that** a drive (11) for moving the entire welding head (3) is provided that can preferably be activated by the evaluation and control unit (13).

18. Computer program having program code means in order to perform all the steps according to the process according to any one of Claims 1 to 14 if the program is executed in an evaluation and control unit (13) comprising a microprocessor control.

19. Computer program having program code means according to Claim 18 that are stored on a data medium.

## Revendications

1. Procédé de soudage de goujons, en particulier pour le soudage de goujons sans pied d'appui, pour le soudage d'une pièce à souder (19), maintenue dans un support de goujon (15) d'une tête de soudage de goujon (3), à une pièce à usiner (17), **caractérisé par** les étapes suivantes :
a) déplacement du support de goujon (15), sans pièce à souder (19) maintenue dans celui-ci, vers la surface de la pièce à usiner, au moins jusqu'à ce qu'un contact entre le côté frontal du support de goujon (15) et la surface de la pièce à usiner se produise ;
b) soulèvement du support de goujon (15) de la pièce à usiner (17) jusqu'à atteindre un écart prédéfini (X_{c}) entre le côté frontal du support de goujon (15) et la surface de la pièce à usiner ;
c) amenée d'une pièce à souder (19) dans le support de goujon (15) de telle sorte que le côté frontal de la pièce à souder (19) dépasse du côté frontal du support de goujon (15) d'une projection prédéfinie (d) ;
d) nouveau déplacement du support de goujon (15) vers la surface de la pièce à usiner jusqu'à ce qu'un contact entre le côté frontal de la pièce à souder (19) et la surface de la pièce à usiner soit détecté, et saisie de la distance parcourue par le support de goujon (15) ou un élément qui y est couplé, depuis la position obtenue à l'étape b) jusqu'à la détection du contact ;
e) comparaison de la distance saisie avec l'écart fixé selon l'étape b), la présence d'une pièce à souder (19) étant supposée lorsque la distance saisie est inférieure d'au moins un montant prédéfini à l'écart prédéfini (X_{c});
f) réalisation du soudage au cas où la présence d'une pièce à souder (19) a été détectée.

2. Procédé selon la revendication 1, **caractérisé en ce que** l'on suppose la présence de la pièce à souder (19) dans le support de goujon (15) dans une position autorisée pour le soudage lorsque la différence entre l'écart prédéfini (X_{c}) et la distance saisie se situe dans une plage prédéfinie.

3. Procédé selon la revendication 1 ou 2, **caractérisé en ce que** le déplacement selon la caractéristique a) de la revendication 1 n'est réalisé que jusqu'à ce qu'un contact soit détecté entre le support de goujon (15) et la pièce à usiner (17).

4. Procédé selon l'une quelconque des revendications 1 à 3, **caractérisé en ce que** la détection du contact entre le support de goujon (15) et la surface de la pièce à usiner et/ou la détection du contact entre la pièce à souder (19) et la surface de la pièce à usiner est réalisée par détection d'un contact électrique ou mécanique.

5. Procédé selon l'une quelconque des revendications précédentes, **caractérisé en ce qu'**au moins tous les déplacements du support de goujon (15) selon les caractéristiques b) et d) de la revendication 1 sont opérés par un entraînement (7) prévu dans la tête de soudage du goujon (3) pour le support de goujon (15) ou un élément qui y est couplé.

6. Procédé selon l'une quelconque des revendications précédentes, **caractérisé en ce que** la tête de soudage du goujon (3), avant la réalisation des étapes selon la revendication 1, est positionnée par rapport à la pièce à usiner (17) au moyen d'un entraînement de positionnement (11) de telle manière qu'entre le côté frontal du support de goujon (15) et la surface de la pièce à usiner, de préférence au point de soudure souhaité, un écart (X_{c}) est présent.

7. Procédé selon la revendication 6, **caractérisé en ce que** le déplacement du support de goujon (15) selon la caractéristique a) de la revendication 1 est également opéré par l'entraînement (7), prévu dans la tête de soudage du goujon (3), pour le support de goujon (15) ou un élément qui y est couplé.

8. Procédé selon l'une quelconque des revendications 1 à 5, **caractérisé en ce que** le déplacement du support de goujon (15) selon la caractéristique a) de la revendication 1 est réalisé au moyen d'un entraînement de positionnement (11) pour la tête de soudage de goujon (3), le déplacement de la tête de soudage (3) étant commandé ou réglé dans une position dans laquelle un contact est donné avec une sécurité suffisante entre le côté frontal du support de goujon (15) et la surface de la pièce à usiner.

9. Procédé selon la revendication 8, **caractérisé en ce que** le déplacement de la tête de soudage de goujon (3) a lieu vers la pièce à usiner (17) de telle sorte que le support de goujon (15) est déplacé vers l'intérieur depuis une position initiale vers l'intérieur de la tête de soudage de goujon (3), l'entraînement (7) du support de goujon (15) ou d'un élément qui y est couplé permettant un tel déplacement, et **en ce que** les déplacements du support de goujon selon les caractéristiques b) et d) de la revendication 1 sont opérés par l'entraînement (7) du support de goujon (15) ou d'un élément qui y est couplé.

10. Procédé de soudage de goujons, en particulier pour le soudage de goujons sans pied d'appui, pour le soudage d'une pièce à souder (19) maintenue dans un support de goujon (15) d'une tête de soudage de goujon (3) à une pièce à usiner (17), **caractérisé par** les étapes suivantes :
a) déplacement du support de goujon (15) avec une pièce à souder (19) maintenue dans celui-ci, vers la surface de la pièce à usiner au moins jusqu'à ce qu'un contact entre le côté frontal de la pièce à souder (19) et la surface de la pièce à usiner soit donné, la pièce à souder (19) étant maintenue dans une position dans le support de goujon (15) de telle sorte que le côté frontal de la pièce à souder (19) dépasse du côté frontal du support de goujon (15) d'une projection (d) prédéfinie ;
b) tentative de déplacer le support de goujon (15) plus loin vers la pièce à usiner (17) et détection d'un autre déplacement possible ;
c) supposition de la présence d'une pièce à souder (19) lorsqu'un autre déplacement du support de goujon (15) et donc un déplacement axial de la pièce à souder (19) dans le support de goujon (15) était possible vers l'intérieur d'au moins une distance prédéfinie ;
d) soulèvement du support de goujon (15) et donc du côté frontal de la pièce à souder (19) d'un écart prédéfini de la surface de la pièce à usiner ;
e) déplacement de la pièce à souder (19) dans la position d'origine dans le support de goujon;
f) réalisation du soudage, au cas où la présence d'une pièce à souder (19) aurait été détectée.

11. Procédé selon la revendication 10, **caractérisé en ce qu'**en cas de tentative de déplacement selon la caractéristique c) de la revendication 10, la puissance à l'arbre d'un entraînement (7, 11) du support de goujon (15) ou de la tête de soudage (3), ou la force de pression agissant dans le support de goujon (15) ou un élément qui y est couplé lors de la tentative de déplacement dans celui-ci, est saisie, et **en ce qu'**en cas de détection d'une puissance à l'arbre ou d'une force de pression excédant un seuil prédéfini, la tentative de déplacement est interrompue.

12. Procédé selon la revendication 10 ou 11, **caractérisé en ce qu'**entre les étapes e) et f) de la revendication 10, on réalise un nouveau positionnement d'écart du support de goujon (15) et donc du côté frontal de la pièce à souder (19) par rapport à la surface de la pièce à usiner, qui a lieu de préférence en déplaçant le support de goujon (15) vers la pièce à usiner (17) jusqu'à ce qu'un contact entre la pièce à souder (19) et la pièce à usiner (17) soit détecté, et que le support de goujon (15) soit alors soulevé d'une distance prédéfinie.

13. Procédé selon l'une quelconque des revendications 1 à 9, **caractérisé en ce que** lors de l'amenée de la pièce à souder (19), son contact avec la surface de la pièce à usiner est surveillé, et **en ce que** lors de la détection d'un contact dès l'amenée constatant la présence d'une pièce à souder (19), maintenue dans le support de goujon avant l'amenée, son contact est fermé et le procédé d'amenée est de préférence arrêté.

14. Procédé selon la revendication 13, **caractérisé en ce que**, si nécessaire, le support de goujon (15) est déplacé dans la position dans laquelle la pièce à souder (19) déjà existante peut être éjectée par un redémarrage du déplacement d'amenée de la pièce à souder (19) pour son amenée dans la position d'origine dans le support de goujon (15).

15. Dispositif de soudage de goujons pour réaliser le procédé selon l'une quelconque des revendications précédentes,
a) avec une tête de soudage de goujon (3) comportant un entraînement (7) pour un support de goujon (15) ou un élément qui y est couplé,
b) avec des moyens pour détecter un contact électrique ou mécanique entre le support de goujon (15) et une pièce à usiner (17) ou entre une pièce à souder (19) maintenue dans le support de goujon (15) et la pièce à usiner, et
c) une unité d'exploitation et de commande (13) reliée à l'entraînement (7) du support de goujon (15) et aux moyens pour détecter un contact électrique ou mécanique,
**caractérisé en ce que**
d) l'unité d'exploitation (13) est formée de telle sorte qu'elle commande l'entraînement (7) du support de goujon et les moyens pour détecter un contact électrique ou mécanique selon les étapes de procédé selon l'une quelconque des revendications précédentes.

16. Dispositif selon la revendication 15, **caractérisé en ce que** les moyens pour détecter un contact électrique ou mécanique comprennent une unité pour saisir la puissance absorbée électrique de l'entraînement (7) du support de goujon ou un paramètre qui y est couplé.

17. Dispositif selon la revendication 15 ou 16, **caractérisé en ce qu'**un entraînement (11) est prévu pour déplacer l'ensemble de la tête de soudage (3), lequel peut être commandé de préférence par l'unité d'exploitation et de commande (13).

18. Programme informatique avec des moyens de code informatique en vue de réaliser toutes les étapes selon le procédé selon l'une quelconque des revendications 1 à 14, lorsque le programme est exécuté dans une unité d'exploitation et de commande (13) comprenant une commande à microprocesseur.

19. Programme informatique avec des moyens de code informatique selon la revendication 18 mémorisés sur un support de données.
